# EUROPÄISCHE PATENTANMELDUNG

(11) **EP 0 659 460 A2**
(43) Veröffentlichungstag der Anmeldung: **28.06.1995**
(21) Anmeldenummer: 94118942.5
(22) Anmeldetag: 01.12.1994
(51) Int. Cl.: B01D 37/04, B01D 29/01

(54) **Verfahren zur Bestimmung des Endes eines Filtrationsvorganges**

(30) Priorität: 07.12.1993 DE 4341651
(71) Anmelder: HPI Messtechnik GmbH, D-36124 Eichenzell (DE); Dr. Wolfgang Günther - Mikroprozessorsteuerungen & Antriebstechnik ( MPS & AT), D-39179 Barleben (DE)
(72) Erfinder: Günther, Wolfgang, Dr., D-39179 Barleben (DE); Hahl, Eberhard, D-36145 Hofbieber (DE)
(74) Vertreter: Schlagwein, Udo, Dipl.-Ing.

(57) **Zusammenfassung**

Bei einem Filtrationsvorgang wird Flüssigkeit mit Hilfe von auf den Flüssigkeitsspiegel wirkenden Druck durch ein Filtermedium gepreßt. Dieser Druck wird fortwährend erfaßt. Tritt bei Beendigung des Filtrationsvorganges eine Druckänderung aufgrund des dann anstelle der Flüssigkeit durch das Filtermedium strömenden Gases auf, dann wird hieraus auf das Ende des Filtrationsvorganges geschlossen.

## Beschreibung

Die Erfindung betrifft ein Verfahren zur Bestimmung des Endes eines Filtrationsvorganges, bei dem eine Flüssigkeit durch ein Filtermedium fließt und zur Beschleunigung des Filtrationsvorganges entweder innerhalb eines Filterbehälters ein Raum oberhalb des Filtermediums mit einer gasförmigen Druckmittelquelle oder ein Raum unterhalb des Filtermediums mit einer Unterdruckquelle verbunden wird.

Ein Verfahren der vorstehenden Art ist beispielsweise in der DE-A-39 02 706 beschrieben. Gemäß dieser Schrift wird der Trockengehalt einer Zellstoffsuspension bestimmt, indem eine hinsichtlich ihres Gewichtes definierte Flüssigkeitsmenge filtriert, der Filterrückstand dann getrocknet und anschließend gewogen wird. Zur Beschleunigung des Filtrationsvorganges ist ein in der Schrift als Ansaugstutzen bezeichneter Raum unterhalb des Filtermediums als nach unten gerichteter, durch ein Rohr verlängerter Trichter ausgebildet, der vor der Filtration mit Wasser gefüllt und mittels eines Ventils abgesperrt wird. Zum Starten des Filtrationsvorganges öffnet man das Ventil, so daß das Wasser aufgrund seines Gewichtes die oberhalb des Filtermediums befindliche, zu filternde Flüssigkeitsmenge durch das Filtermedium zieht. Statt die zu filternde Flüssigkeit mit Unterdruck durch das Filtermedium zu ziehen, könnte man natürlich auch die Flüssigkeit mit Überdruck beaufschlagen.

Wenn man mit der bekannten Vorrichtung möglichst rasch und exakt den Feststoffgehalt einer Probe bestimmen will, dann ist es erforderlich, möglichst zuverlässig das Ende des Filtrationsvorganges zu erkennen. Ein vorzeitiges Abbrechen der Filtration würde das Meßergebnis verfälschen. Eine unnötig lange Filtration würde zu Zeitverlusten führen. Bisher wird das Filtrationsende überlicherweise durch optische Beobachtung festgelegt. In der genannten DE-A-39 02 706 ist deshalb angegeben, daß die Höhe des Flüssigkeitsspiegels überwacht werden soll.

Der Erfindung liegt das Problem zugrunde, ein Verfahren zu schaffen, mit dem eine weitgehend exakte, zeitsparende und automatisierbare Erfassung des Filtrationsendes möglich wird.

Dieses Problem wird erfindungsgemäß dadurch gelöst, daß der Druck des mit der Druckmittelquelle oder der mit der Unterdruckquelle verbundenen Raumes fortwährend erfaßt und aus der bei Beendigung des Filtrationsvorganges auftretenden Druckänderung aufgrund des dann anstelle der Flüssigkeit durch das Filtermedium strömenden Gases auf das Ende des Filtrationsvorganges geschlossen wird.

Durch eine solche Drucküberwachung läßt sich sehr zuverlässig das Ende des Filtrationsvorganges ermitteln, weil sich der Druck sehr rasch ändert, sobald sich oberhalb des Filtermediums keine Flüssigkeit mehr befindet, welche für Gas eine Abdichtung darstellt.

Wie beispielsweise die DE-U-87 09 484.3 zeigt, ist es bei Filtern bekannt, die Druckdifferenz zwischen der Einlaßseite und der Auslaßseite automatisch zu überwachen, jedoch dient eine solche Überwachung nicht dazu, das Ende eines Filtrationsvorganges zu bestimmen, sondern den richtigen Zeitpunkt für die Einleitung eines Filterreinigungsvorganges.

Der Druckabfall in dem Raum oberhalb oder unterhalb des Filtermediums ist besonders stark, wenn zwischen der Druckmittelquelle oder der Unterdruckquelle und dem jeweiligen Raum des Filterbehälters eine Drossel geschaltet wird.

Das erfindungsgemäße Verfahren paßt sich automatisch Flüssigkeiten mit unterschiedlicher Viskosität und unterschiedlichem Feststoffgehalt an, wenn in einem ersten Verfahrensschritt während des Filtrationsvorganges der maximale Überdruck oder Unterdruck ermittelt wird und aus einer festgelegten Druckdifferenz zu diesem maximalen Überdruck oder Unterdruck auf das Ende des Filtrationsvorganges geschlossen wird.

Für die Filtration einer Zellstoffsuspension hat es sich als optimal herausgestellt, wenn bei Arbeiten mit einem Überdruck von O,2 MPa die Druckdifferenz etwa 0,005 MPa beträgt. Bei einer solchen Druckdifferenz ergibt sich ein elektrisches Äquivalent, welches ausreichend größer ist als das Signalrauschen der Druckmeß- und -Vergleichsanordnung.

Zur weiteren Verdeutlichung des erfindungsgemäßen Verfahrens wird nachfolgend auf die Zeichnung Bezug genommen. Diese zeigt in
- Fig.1: eine Anordnung zur Ausführung des erfindungsgemäßen Verfahrens,
- Fig.2: ein Druck-Zeit-Diagramm zur Verdeutlichung des Verfahrens nach der Erfindung.

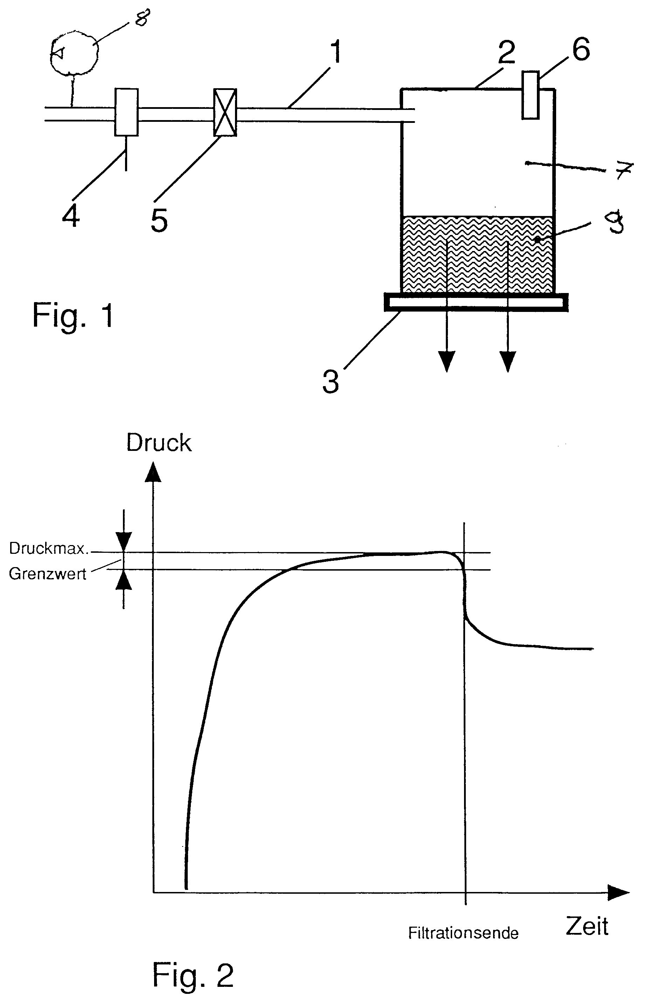

Die Anordnung hat gemäß Figur 1 eine Zuleitung 1, die einen Filterbehälter 2 speist, der ein Filtermedium 3 aufweist. In der Zuleitung 1 sind ein Magnetventil 4 und eine Drossel 5 angeordnet. Im Filterbehälter 2 ist in einem Raum 7 oberhalb des Filtermediums 3 ein Drucksensor 6 angeordnet. Der Raum 7 kann mittels einer Druckmittelquelle 8 unter Überdruck gesetzt werden.

Zu Beginn des Filtrationsvorganges läßt man über die Zuleitung 1 eine definierte Menge Flüssigkeit 9 in den Behälter 2 laufen. Dann fördert man mit der Druckmittelquelle 8 über die Zuleitung 1 Druckluft in den Raum 7, durch die die Flüssigkeit 9 zusätzlich zur Wirkung der Schwerkraft durch das Filtermedium 3 gedrückt wird.

Während des Filtrationsvorganges ermittelt man mittels des Drucksensors 6 den maximal auftretenden Druck im Raum 7. Fällt dieser Druck um einen in Figur 2 gekennzeichneten Grenzwert, dann ist das ein Indiz dafür, daß statt Flüssigkeit Luft durch das Filtermedium strömt und der Filtrationsvorgang beendet ist. Der gemessene Maximalwert kann beim ersten Filtrationsvorgang abgespeichert werden. Fällt bei nachfolgenden Filtrationsvorgängen der Druck um den festgelegten Grenzwert unter diesem abgespeicherten Maximalwert, dann ist das ein Indiz für den Endzeitpunkt des Filtrationsvorganges.

Möglich ist es jedoch auch, bei jedem Filtrationsvorgang erneut einen Maximalwert und den Druckabfall in Bezug auf diesen Maximalwert zu bestimmen.

## Patentansprüche

1. Verfahren zur Bestimmung des Endes eines Filtrationsvorganges, bei dem eine Flüssigkeit durch ein Filtermedium fließt und zur Beschleunigung des Filtrationsvorganges entweder innerhalb eines Filterbehälters ein Raum oberhalb des Filtermediums mit einer gasförmigen Druckmittelquelle oder ein Raum unterhalb des Filtermediums mit einer Unterdruckquelle verbunden wird, **dadurch gekennzeichnet**, daß der Druck des mit der Druckmittelquelle oder der mit der Unterdruckquelle verbundenen Raumes fortwährend erfaßt und aus der bei Beendigung des Filtrationsvorganges auftretenden Druckänderung aufgrund des dann anstelle der Flüssigkeit durch das Filtermedium strömenden Gases auf das Ende des Filtrationsvorganges geschlossen wird.

2. Verfahren nach Anspruch 1, **dadurch gekennzeichnet**, daß zwischen der Druckmittelquelle oder der Unterdruckquelle und dem jeweiligen Raum des Filterbehälters eine Drossel geschaltet wird.

3. Verfahren nach den Ansprüchen 1 oder 2, **dadurch gekennzeichnet**, daß in einem ersten Verfahrensschritt während des Filtrationsvorganges der maximale Überdruck oder Unterdruck ermittelt wird und aus einer festgelegten Druckdifferenz zu diesem maximalen Überdruck oder Unterdruck auf das Ende des Filtrationsvorganges geschlossen wird.

4. Verfahren nach Anspruch 3, **dadurch gekennzeichnet**, daß bei Arbeiten mit einem Überdruck von O,2 MPa die Druckdifferenz etwa 0,005 MPa beträgt.
